# EUROPEAN PATENT APPLICATION

(11) **EP 3 264 143 A1**
(43) Date of publication of application: **03.01.2018**
(21) Application number: 17305762.1
(22) Date of filing: 21.06.2017
(51) Int. Cl.: G01V 13/00, G01V 1/38, G01V 1/20, B08B 1/00, B08B 9/02, B63B 35/00, B63G 8/00

(54) **TOWED REMOTE CONTROLLED VEHICLE FOR SEISMIC SPREAD INTERVENTION AND METHOD**

(30) Priority: 23.06.2016 US 201662353644 P
(71) Applicant: CGG Services SAS, 91300 Massy (FR)
(72) Inventor: MOULINIER, Timothée, 91300 MASSY (FR); PETRIGNY, Alexandre, 91300 Massy (FR); MACQUIN, Raphaël, 91300 Massy (FR); RICHER DE FORGES, Hervé, 91300 Massy (FR)
(74) Representative: Petit, Maxime

(57) **Abstract**

Method and seismic data acquisition system includes a streamer spread (740) including (i) a streamer (715) having receivers (716) for recording seismic data and (ii) a connecting cable (746, 742) connecting the streamer (715) to a towing vessel (710); a collar device (764) configured to move along the connecting cable (746, 742), between the towing vessel and the streamer; and a remotely operated vehicle (ROV) (750) attached to the collar device (764) with an umbilical (763) and configured to carry an interchangeable payload (754).

## Description

### CROSS-REFERENCE TO RELATED APPLICATIONS

This application claims priority and benefit from U.S. Provisional Patent Application No. 62/353,644, filed on June 23, 2016, entitled "Towed ROV for interventions in the spread," the entire disclosure of which is incorporated herein by reference.

### BACKGROUND

### TECHNICAL FIELD

Embodiments of the subject matter disclosed herein generally relate to methods and systems and, more particularly, to mechanisms and techniques for using a towed remotely operated vehicle (ROV) under water for performing various operations on a streamer spread.

### DISCUSSION OF THE BACKGROUND

Marine seismic data acquisition and processing generate a profile (image) of the geophysical structure (subsurface) under the seafloor. While this profile does not provide an accurate location for the oil and gas, it suggests, to those trained in the field, the presence or absence of oil and/or gas. Thus, providing a high-resolution image of the subsurface is an ongoing process for the exploration of natural resources, including, among others, oil and/or gas.

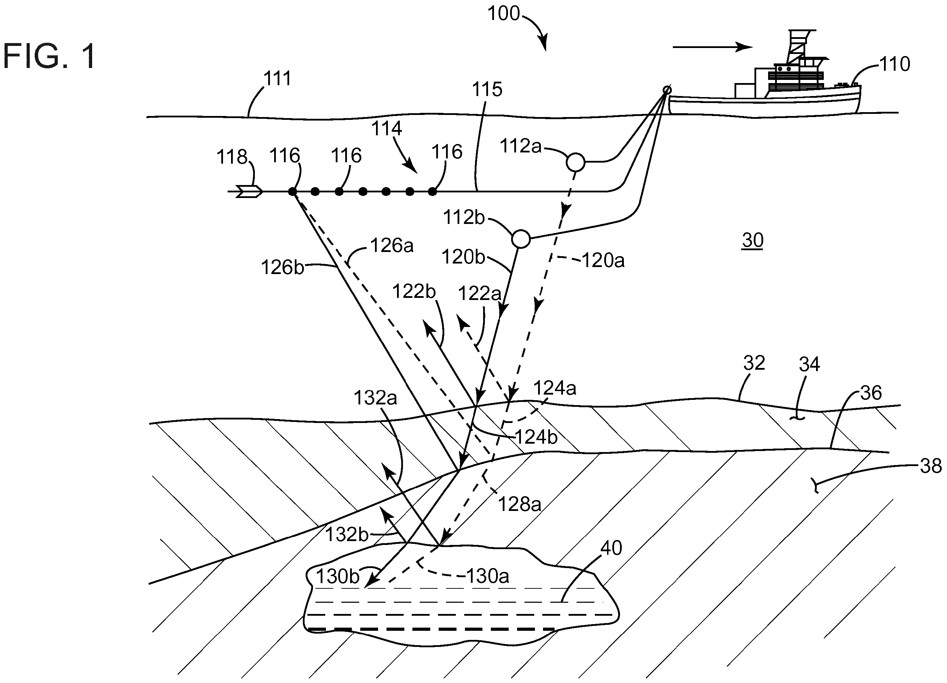

Figure 1 illustrates a marine seismic data acquisition system 100. In this vertical view, a vessel 110 tows seismic sources 112a and 112b and a streamer spread 114 having plural streamers (only one streamer 115 is shown in the figure) at predetermined depths under the water surface 111. Although only one streamer 115 is visible in this vertical view, plural streamers are typically spread in a three-dimensional volume. Streamer 115, which has a tail buoy 118 and likely other positioning devices attached, houses seismic receivers/sensors 116.

The seismic sources generate seismic waves such as 120a and 120b that propagate through the water layer 30 toward the seafloor 32. At interfaces (e.g., 32 and 36) between layers (e.g., water layer 30, first layer 34, and second layer 38) inside which the seismic waves propagate with different wave propagation velocities, the waves' propagation directions change as the waves are reflected and/or transmitted/refracted/diffracted. Seismic waves 120a and 120b are partially reflected as 122a and 122b and partially transmitted as 124a and 124b at seafloor 32. Transmitted waves 124a and 124b travel through first layer 34, are then reflected as waves 126a and 126b, and transmitted as 128a and 128b at interface 36. At the surface of reservoir 40, waves 128a and 128b are then partially transmitted as waves 130a and 130b and partially reflected as waves 132a and 132b. The waves traveling upward may be detected by receivers 116. Maxima and minima in the amplitude versus time data recorded by receivers carry information about the interfaces and traveling time through layers.

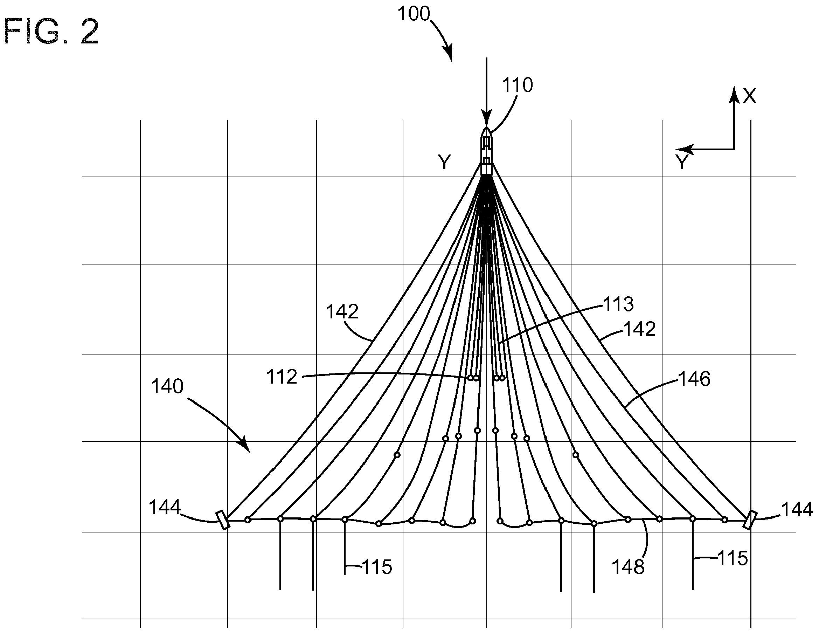

A bird view of this configuration is illustrated in Figure 2, which shows the seismic acquisition system 100 including the vessel 110, which tows two super wide tow ropes 142 provided at respective ends with deflectors 144. Plural lead-in cables 146 are connected to streamers 115 (for simplicity, only a few streamers are illustrated). The plural lead-in cables 146 also connect to the towing vessel 110. Streamers 115 are maintained at desired separations from each other by separation ropes 148. Plural sources 112 are also connected to the vessel 110 through corresponding umbilicals 113. The streamers, deflectors, various ropes and lead-ins, wide tow ropes and birds for a streamer spread 140.

Figure 2 offers a better understanding of the complexity of the streamer spread than Figure 1. The operator of the seismic survey is faced not only with the complexity of the streamer spread (e.g., maintaining all these elements untangled), but also with the fact that the streamer spread needs constant maintenance due to the various issues that it encounters during a seismic survey (e.g., barnacle deposits, obstacle management, spread monitoring, spread inspection).

Traditionally, these issues associated with the streamer spread require workboat operations, i.e., an additional boat is launched from the towing vessel 110 and this workboat approaches the streamer that needs attention, and one or more persons on this workboat manually perform the work necessary to address the specific issue. Alternatively, if the issue cannot be solved from a workboat or workboat operations are not allowed, due to local regulations, the seismic survey is halted and the streamer spread is recovered on the towing vessel for performing the necessary work. Both operations may lead to certain down time for the seismic survey, which is undesirable and costly.

Moreover, workboat operations are complex and tricky. In addition, these operations are weather dependent (i.e., bad weather prevents the launch of a workboat) and they must occur during the day so that the working personnel can see the streamer spread whereas the seismic survey is performed day and night without pause.

Because of these dependencies, the workboat or recovery operations are not as efficient as needed by the operator of the seismic survey.

Thus, there is a need for another approach to these issues, that is capable to perform various operations as soon as needed, irrespective of the time of day or night and irrespective of the weather conditions.

### SUMMARY

According to an embodiment, there is a seismic data acquisition system that includes a streamer spread including (i) a streamer having receivers for recording seismic data and (ii) a connecting cable connecting the streamer to a towing vessel; a collar device configured to move along the connecting cable, between the towing vessel and the streamer; and a remotely operated vehicle, ROV, attached to the collar device with an umbilical and configured to carry an interchangeable payload.

According to another embodiment, there is a payload system for performing various operations on a streamer spread of a marine seismic data acquisition system. The payload system includes a collar device to be attached to a connecting cable, which extends between a towing vessel and a streamer of the marine seismic data acquisition system; and a remotely operated vehicle, ROV, attached to the collar device with an umbilical and configured to carry an interchangeable payload.

According to still another embodiment, there is a method for performing various operations on a streamer spread of a marine seismic data acquisition system. The method includes attaching a collar device to a connecting cable, which extends between a towing vessel and a streamer; connecting a remotely operated vehicle, ROV, to the collar device with an umbilical; attaching a desired interchangeable payload to the ROV; and operating the collar device along the connecting cable and controlling a length of the umbilical to position the ROV at a desired position of the streamer spread for performing one operation of the various operations.

### BRIEF DESCRIPTION OF THE DRAWINGS

The accompanying drawings, which are incorporated in and constitute a part of the specification, illustrate one or more embodiments and, together with the description, explain these embodiments. In the drawings:
Figure 1 is a side view of a conventional marine seismic acquisition system;
Figure 2 is a top view of the conventional marine seismic acquisition system;
Figure 3 illustrates a marine seismic acquisition system having an ROV for performing various functions on the streamer spread;
Figure 4 illustrates a connection between the ROV and a vessel that tows the streamer spread;
Figure 5 illustrates a marine seismic acquisition system having an ROV controlled by a collar device for performing various functions on the streamer spread;
Figure 6 illustrates a marine seismic acquisition system having an ROV controlled by two collar devices for performing various functions on the streamer spread;
Figure 7 illustrates a first configuration of the collar device that controls the ROV;
Figure 8 illustrates a second configuration of the collar device that controls the ROV;
Figure 9 illustrates a third configuration of the collar device that controls the ROV;
Figure 10 illustrates a fourth configuration of the collar device that controls the ROV;
Figure 11 illustrates a fifth configuration of the collar device that controls the ROV;
Figures 12A and 12B illustrate an ROV being controlled with two collar devices;
Figures 13A and 13B illustrate how a depth of the ROV may be controlled with the collar device;
Figures 14A and 14B illustrate the use of a float attached to the collar device or the ROV;
Figure 15 illustrates a configuration of the ROV;
Figure 16 illustrates the use of plurality ROVs with a streamer spread; and
Figure 17 is a flowchart of a method for performing various operations with an ROV on a streamer spread.

### DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to the terminology and structure of a streamer spread. However, the embodiments to be discussed next are not limited to this structure, but they may be applied to other structures that are towed under water.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner with other features or structures in one or more embodiments.

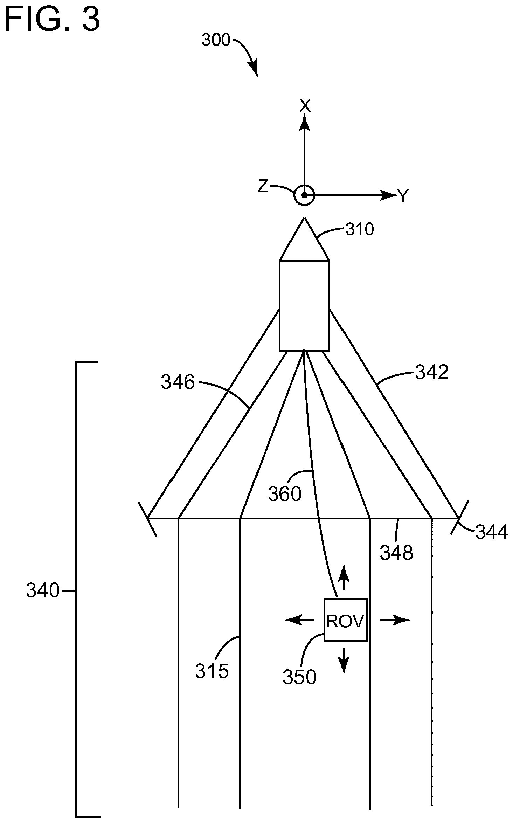

According to an embodiment illustrated in Figure 3, a seismic data acquisition system 300 includes, in addition to a towing vessel 310 and a streamer spread 340, at least one ROV 350 that is towed by the towing vessel 310. ROV 350, as discussed later, may have various systems for controlling its position relative to spread. For example, the ROV 350 may have wings and/or a buoyancy system for adjusting its position along a vertical direction Z, and/or it may have wings for adjusting its position along a cross-line direction Y, which is perpendicular to the inline direction X and the vertical direction Z.

Figure 3 shows the ROV 350 being towed by vessel 310 with a towing mechanism 360. This towing mechanism allows to adjust the position mainly in X direction. Towing mechanism 360 may be as simple as a cable as illustrated in Figure 3 and a winch located on the towing vessel. However, the towing mechanism 360 may be more sophisticated as discussed later. A position of the ROV 350 may be adjusted along the inline direction X, cross-line direction Y and/or the depth direction Z with the towing mechanism 360.

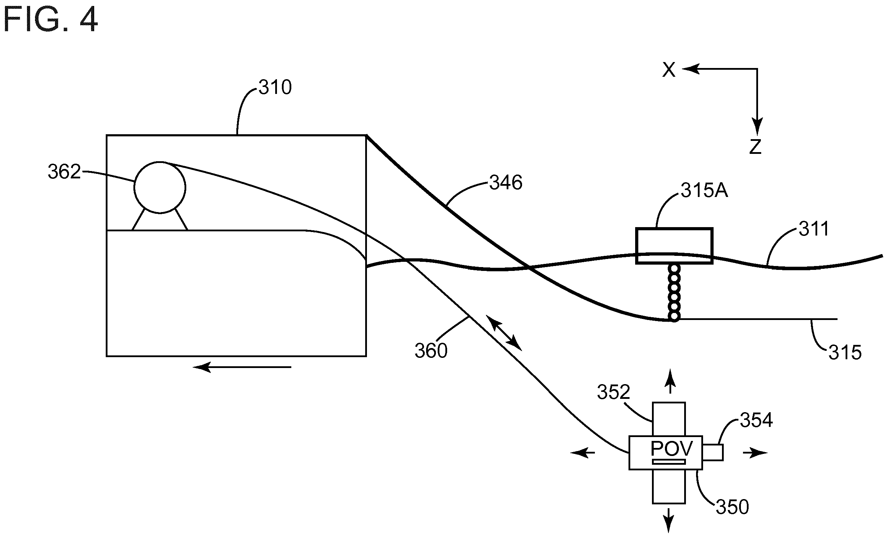

Figure 4 illustrates a side view of the ROV 350, being deployed in water and located under the streamer 315. This figure also shows a head of the streamer being held at a given depth by a head float 315A. Note that head float 315A may float at the water surface 311, or under this surface. A winch 362 is shown installed at the back of the towing vessel 310 and connecting to one end of the towing mechanism 360.

ROV 350 is shown having vertical wings 352, for controlling its location along the cross-line direction Y, and also having a payload 354. Payload 354 can be a plug and play payload, i.e., an interchangeable load that is attached to the ROV 350 as needed. In other words, an interchangeable load is a load from a plurality of loads that may be attached to a given port of the ROV and any of these plural loads that can be interchanged with one another and be attached to the given port, depending on the operation to be performed by the ROV. Payload 354 may fulfill various objectives, for example, it may be a cleaning device for cleaning the streamers and other cables, a deployment payload that hosts a cleaning device, an inspection payload that performs video data gathering and/or connects to various elements of the streamer spread for collecting recorded data, an operating payload that may include a controllable arm for removing debris that sticks to the various elements of the streamer spread, an operating payload that activates or communicates with an equipment on the spread. This means that the ROV 350 is compatible with various payloads.

The embodiments of Figures 3 and 4 indicate that ROV 350 has the following characteristics: can be towed by a vessel (towing vessel 310 or another vessel), can be steerable, can be controlled from the mother vessel, can be supplied with power from the mother vessel, can sent information about the streamer spread to the mother vessel in real time, and can connect to various payloads as needed. One skilled in the art would note that this ROV can operate day or night, in good or bad weather and thus, the health and safety of the personnel operating the device is not at risk.

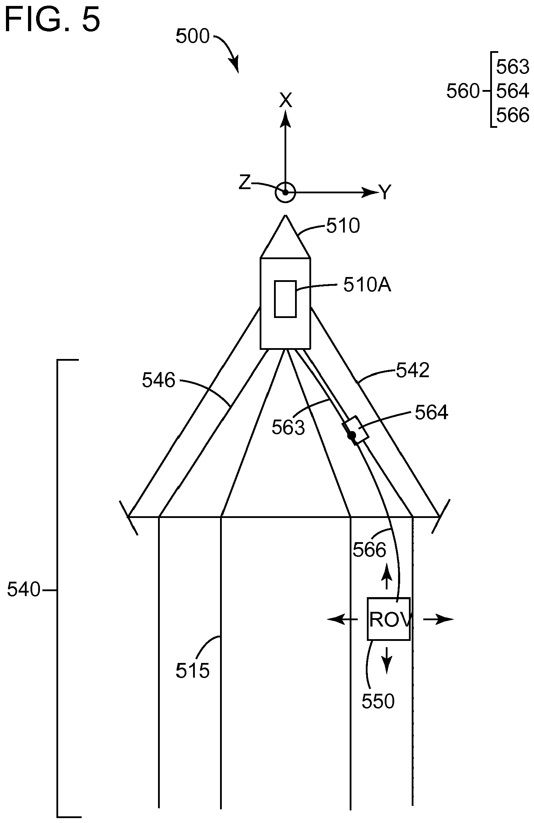

More details about the ROV and its connection to the mother vessel are now discussed with regard to the figures. Figure 5 shows an embodiment in which a seismic data acquisition system 500 includes a towing vessel 510 and a streamer spread 540. The streamer spread includes plural streamers 515 connected to the vessel through corresponding lead-ins 546. Two wide tow ropes 542 are shown sandwiching the plural lead-ins 546.

In this embodiment, the ROV 550 is connected to the vessel 510 through a towing mechanism 560, which includes a collar device 564 attached either to the lead-in 546 or the wide tow rope 542. The towing mechanism 560 also includes a first cable 563 that connects the collar device 564 to the towing vessel, and a second cable 566 that connects the collar device to the ROV 550. In one application, the first and second cables may be the same cable, as discussed later.

Collar device 564 may move up and down along the lead-in or wide tow rope when controlled by a global controller 510A located on the vessel. By adjusting the position of the collar device 564 along the lead-in or wide tow rope, a cross-line position of the ROV 550 along the Y axis can be adjusted. By adjusting a length of the second cable 566 with the controller 510A, an inline position of the ROV 550 along the X axis can be adjusted. Thus, the position of the ROV 550 in the XY plane is adjustable. By adjusting the various wings located on the ROV, as the ROV is towed by the vessel 510 with a given speed, its depth position along the Z axis can be adjusted. This means that the ROV's position is fully controllable by controller 510A and thus, the ROV can be moved along the streamer or any other component of the streamer spread for performing the desired function.

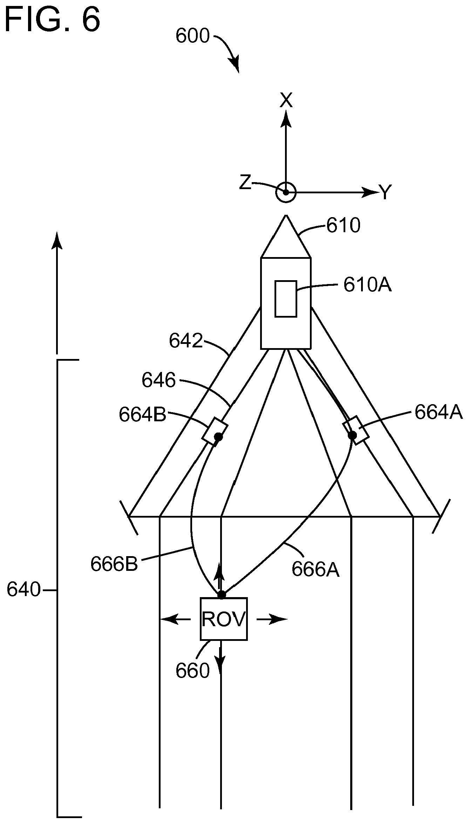

Another configuration of the ROV is illustrated in Figure 6 in which seismic data acquisition system 600 includes a towing vessel 610 and a streamer spread 640. In this case, the ROV 660 is connected to two sliding collar devices 664A and 664B, each capable of sliding on a corresponding lead-in 646 or wide tow rope 642. Two cables 666A and 666B connect the ROV 660 to the two collar devices 664A and 664B, respectively. According to this embodiment, the length of cables 666A and 666B is controlled independently from the controller 610A so that both the inline and cross-line position of the ROV can be controlled with these two cables.

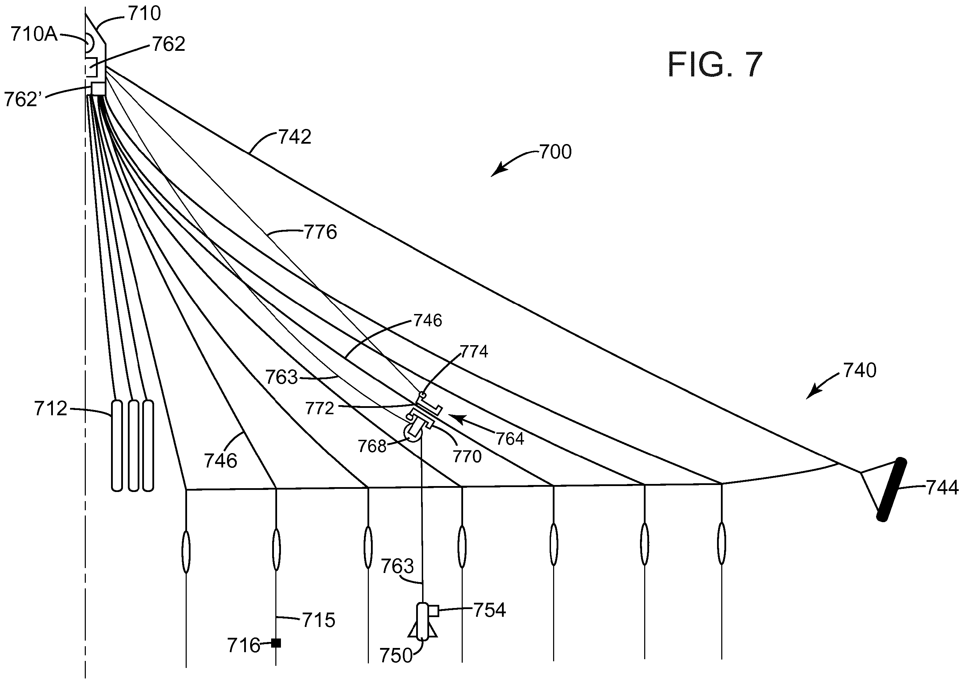

Figure 7 illustrates a seismic data acquisition system 700 in which a collar device 764 is located on a lead-in 746 (or wide tow rope 742, generically called herein connecting cable), which is connected between the towing vessel 710 and a corresponding streamer 715. Streamer 715 includes seismic receivers 716 (only one is illustrated for simplicity). A single cable 763 (ROV umbilical) extends from the vessel 710 to the ROV 750 through collar device 764. ROV 750 is shown in the figure having a payload 754. The collar device, ROV umbilical and the ROV may be called herein a payload system because this system carries a payload for performing various operations on the streamer spread. ROV umbilical 763 may be a conduit for exchanging electric power, pressurized air, data, and/or commands between the vessel or the collar device and the ROV. As shown in the enlarged detail of the collar device 764, ROV umbilical 763 passes a pulley 768 attached to a frame 770 of the collar device 764. Frame 770 also has an orifice 772 through which the lead-in 746 extends. A swivel 774 is attached to the frame 770 and can swivel relative to the frame. A collar control cable 776 connects the swivel 774 to a winch 762 (similar to winch 362 in Figure 3) located on vessel 710. Collar control cable 776 is used to adjust the position of the collar device 764 along the corresponding lead-in 746 or wide tow rope 742. A winch 762', located on the vessel, may also be used to control a length of the ROV umbilical 763, and thus, the inline position of the ROV.

With this arrangement, the position of the ROV may be controlled relative to the streamer spread 740 anywhere between the source 712 and deflector 744. One skilled in the art would understand that a similar arrangement may be used on the other side of the source 712 for controlling the other half of the streamer spread.

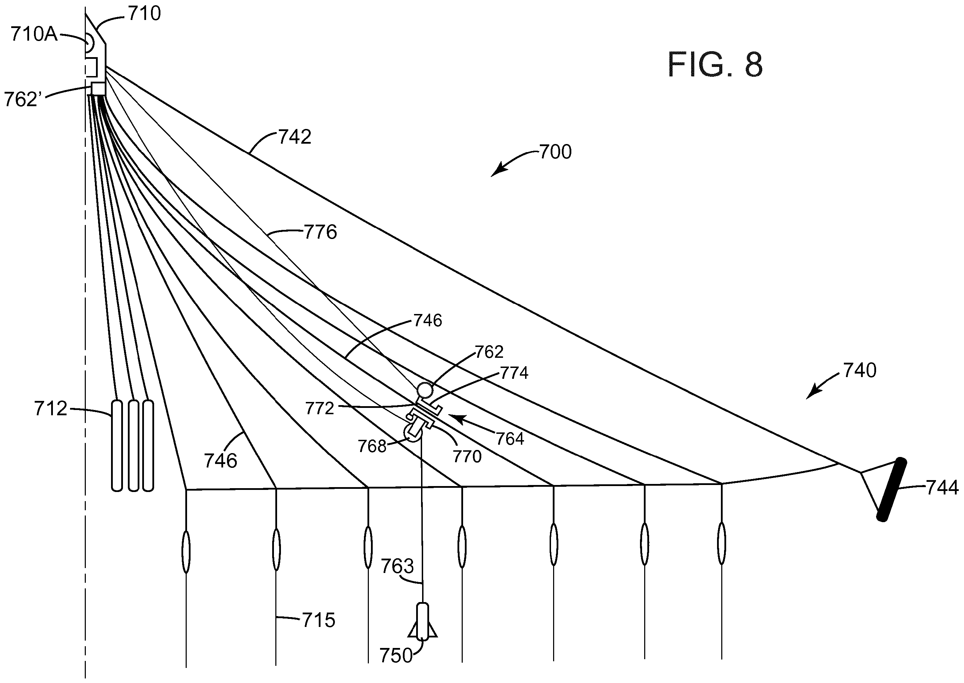

Instead of having the control winch 762 on board the vessel 710 as in the embodiment of Figure 7, it is possible to place it on the collar device as illustrated in Figure 8. In this case, the collar control cable 776 is configured to transmit power, data and/or commands so that the controller 710A can remotely control the winch 762.

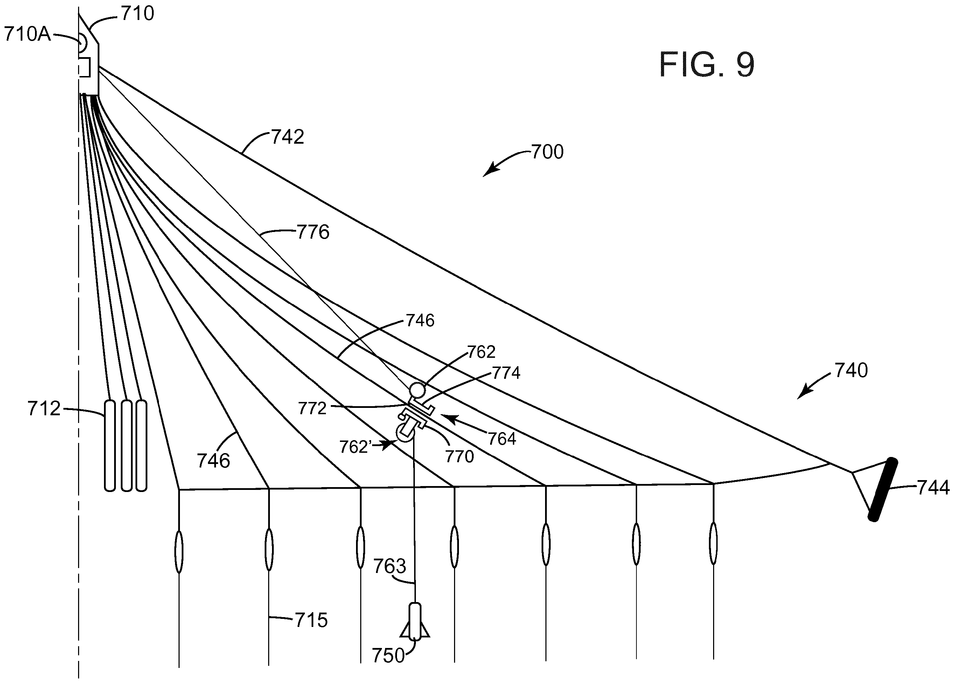

To reduce the number of cables used to control the ROV 750 and collar device 764, the embodiment illustrated in Figure 9 has the ROV umbilical 763 extending only from the collar device 764 to the ROV 750 and not from the vessel 710. For this configuration, the winch 762' is present on the collar device 764 and not on the vessel 710. Thus, for this embodiment, both winches 762 (for controlling the position of the collar device along the lead-in or wide tow rope) and 762' (for controlling the position of the ROV along the inline direction) are located on the collar device. For this situation, the power, data and/or commands are exchanged between the vessel and the collar device via the collar control cable 776.

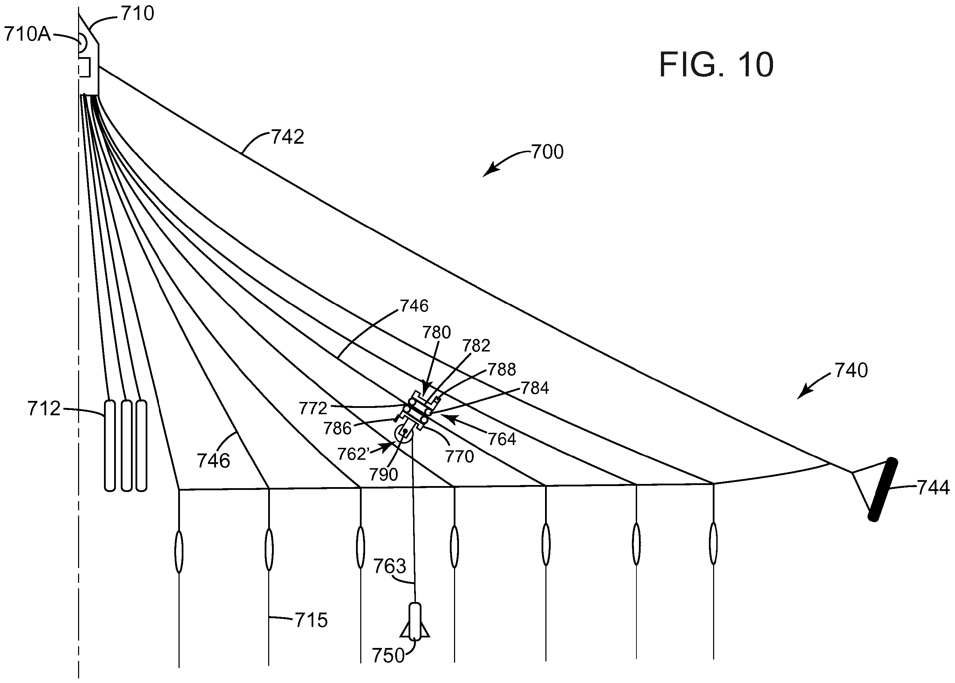

A further embodiment illustrated in Figure 10 shows the collar device 764 being completely autonomous, i.e., not being tethered to the vessel with either collar control cable 776 or ROV umbilical 763. In this case, the collar device 764 has an actuation device 780 attached to frame 770 and the actuation device 780 is capable to move along lead-in 746 or wide tow rope 742. The actuation device 780 may include caterpillars or gripping wheels 782 actuated by a motor 784 for moving along the lead-in. In one embodiment, motor 784 is a linear magnetic motor that uses the lead-in as a magnetic core. For such configuration, commands and/or data can be exchanged with the controller 710A via a transceiver 786 mounted on the collar device. Transceiver 786 may be an acoustic modem or another electronic device that is capable to transmit and receive signals along a cable, for example, the lead-in 746. Collar device 764 may also include a local processor 788 for coordinating the actuation mechanism, the transceiver and the various winches located on the frame 770.

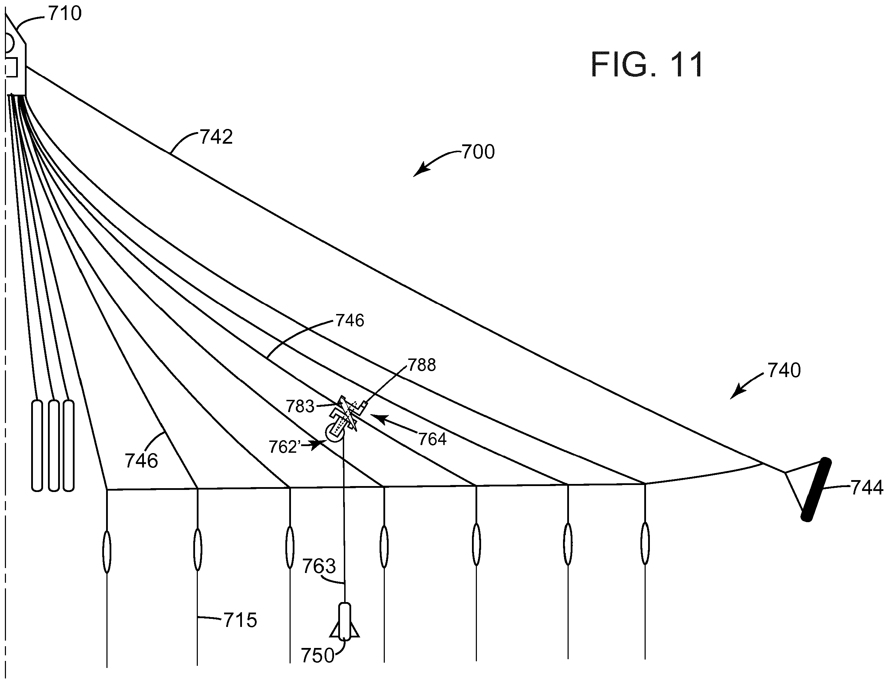

The collar device 764 illustrated in Figure 10 also requires a power source. This power source 790 may be implemented as a battery, fuel cell, hydrogenator, and be either located on the collar device as illustrated in Figure 10, or on the ROV itself. In this regard, Figure 11 shows an embodiment in which the collar device 764 has a hydrodynamic mechanism 783, e.g., a wing, for moving the collar device along the lead-in or wide tow rope. An orientation of the wing may be controlled by the local controller 788 to achieve the desired movement of the collar device.

The embodiments illustrated in Figures 7-11 suggest that the ROV's position can be controlled in the XY plane only on one half of the streamer spreader.

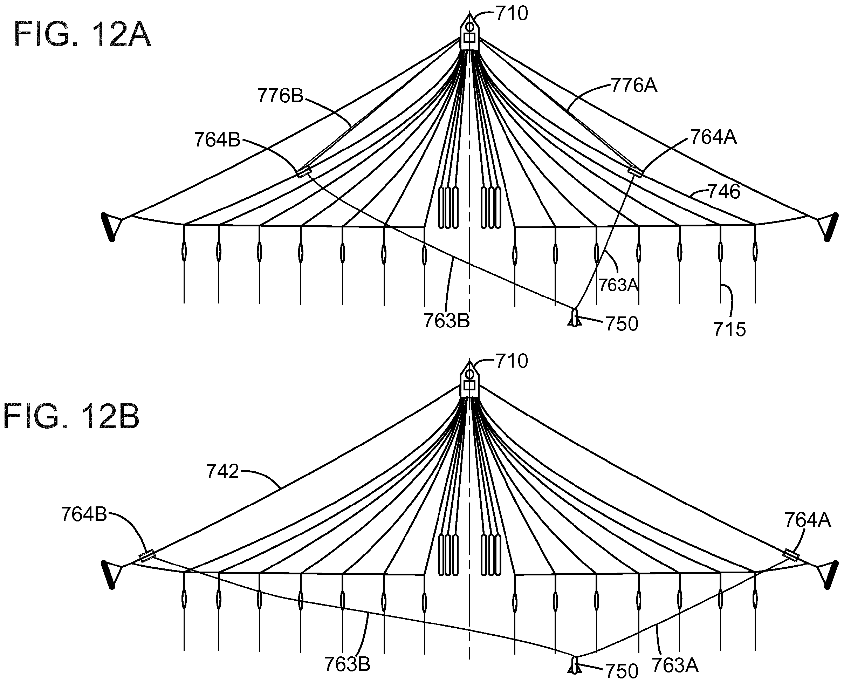

Figures 12A and 12B show that by using two collar devices 764A and 764B, implemented as any of the configurations discussed above with regard to Figures 7-11, and corresponding ROV umbilicals 763A and 763B, it is possible to control the position of the ROV over the entire streamer spread in the XY plane. Figure 12A shows the collar devices 764A and 764B located on corresponding lead-ins 746 while Figure 12B shows the collar devices being located on corresponding wide tow ropes 742.

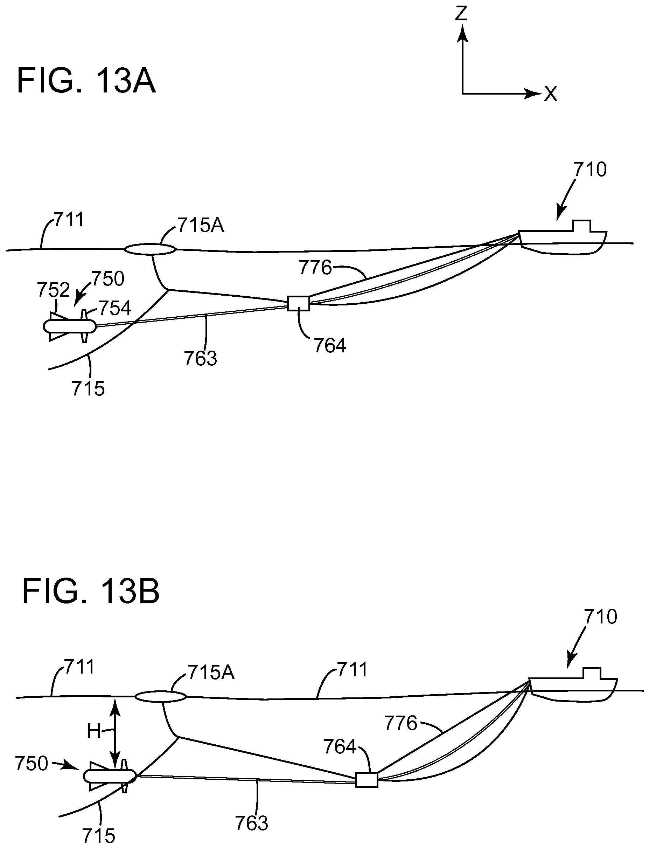

Regarding the vertical positioning of the ROV, Figure 13A shows the ROV 750 having vertical fins 752 for controlling a position in the XY plane and horizontal fins 754 for controlling a vertical position along the Z axis. Figure 13A is a side view of the seismic data acquisition system, with the streamer 715 being connected to a head buoy 715A that floats at the water surface 711. Collar device 764 is shown being attached to the vessel 710 with collar control cable 776 and ROV 750 is attached to ROV umbilical 763. Although this embodiment shows the collar control cable and the ROV umbilical as in the embodiment of Figure 7, any of the configurations discussed in Figures 8-11 may be implemented in the embodiment of Figure 13A. Figure 13B shows that by moving the collar device 764 closer to vessel 710, the vertical position H of the ROV can be adjusted, even if no fins are used. Those skilled in the art would understand that the vertical position of the ROV may also be adjusted with a buoyancy mechanism similar to that of a submarine.

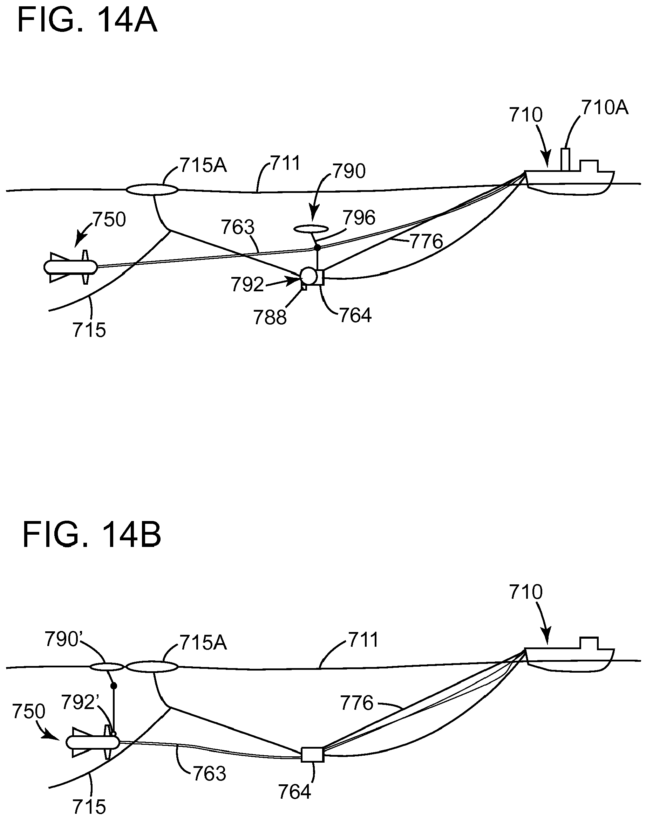

According to another embodiment illustrated in Figure 14A, a collar device float 790 may be connected to a winch 792 attached to the collar device 764. In this case, either the local controller 788 of the collar device, or the global controller 710A of the vessel, may actuate the winch 792 for adjusting a length of the link 796 connecting the winch 792 to the collar device float 790. Optionally, the link may be attached to the ROV umbilical 763.

Figure 14B shows a similar embodiment in which both a winch 792' and a float 790' are located at the ROV and not at the collar device as in the embodiment of Figure 14A. The winch 792' is attached to the ROV while the float 790' floats at the water surface 711. In one embodiment, the float is configured to float under the water surface.

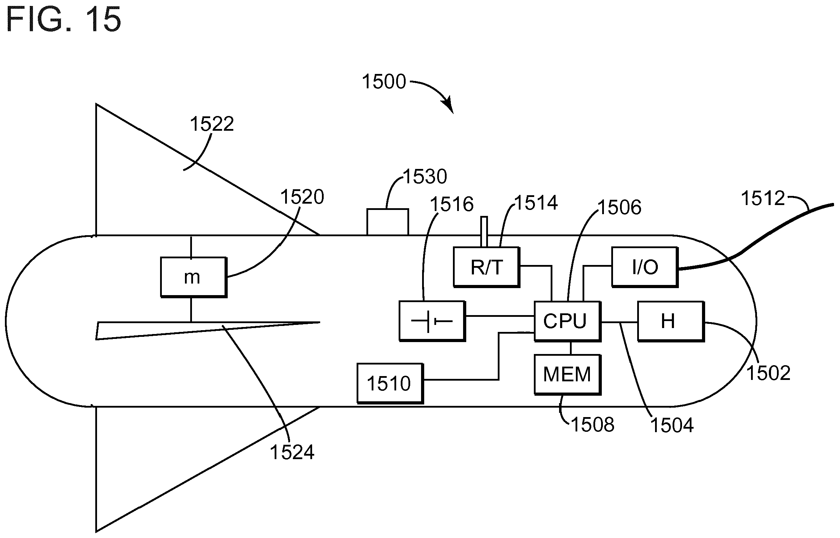

The embodiments discussed above disclose various ways for positioning the ROV in a horizontal plane (XY), substantially parallel to the water surface, but also in a vertical direction. However, to know where the ROV is and to adjust its position accordingly, the ROV may include one or more sensors for determining its position. For example, as illustrated in Figure 15, the ROV 1500 may have a depth sensor 1502 for determining its vertical position. The depth sensor 1502 may be connected, via a bus 1504, to a processor 1506. Processor 1506 is configured to receive data from the depth sensor and other sensors or mechanisms of the ROV, and process them. The processor 1506 is connected to a memory 1508 for storing associated information.

As previously discussed, the ROV may include a buoyancy system 1510 for regulating its depth. Buoyance system 1510 may be controller by processor 1506. Processor 1506 may communicate with the global controller 710A located on the vessel 710 either in a wired manner, through the ROV umbilical 1512, or in a wireless manner, through a modem or transceiver 1514. A power source 1516 may supply with power all these components or the power may be supplied from the ROV umbilical 1512.

Figure 15 also shows one or more motors 1520 capable of actuating vertical wings 1522 and/or horizontal wings 1524. Motor 1520 is controlled by processor 1506. A port 1530 shown on the top of ROV 1500 (it may be located on the bottom of the ROV, on its side, on its nose or tail) is configured to connect to a desired interchangeable payload.

The position of the ROV when under water may be detected with various systems. In one application, a seismic spread acoustic network triangulation system (i.e., various sensors located on the streamers generate acoustic waves and other sensors record the acoustic waves for determining the positions of the streamers) that is used for determining the positions of the streamers may be extended to cover the ROV and determine its position. Alternatively, an ultra-short base line (USBL) system installed on the vessel or one or more of the floats (e.g., streamer floats) may determine the position of the ROV. Still another possibility is to make the ROV to emit a noise in the seismic bandwidth of the receivers of the streamers and to use the data collected by the streamers to determine the position of the ROV. Still another possibility is to use magnetic coding along the cables and streamers for determining the position of the ROV. Those skilled in the art, based on this disclosure, would be able to come with other ways to monitor the position of the ROV under water.

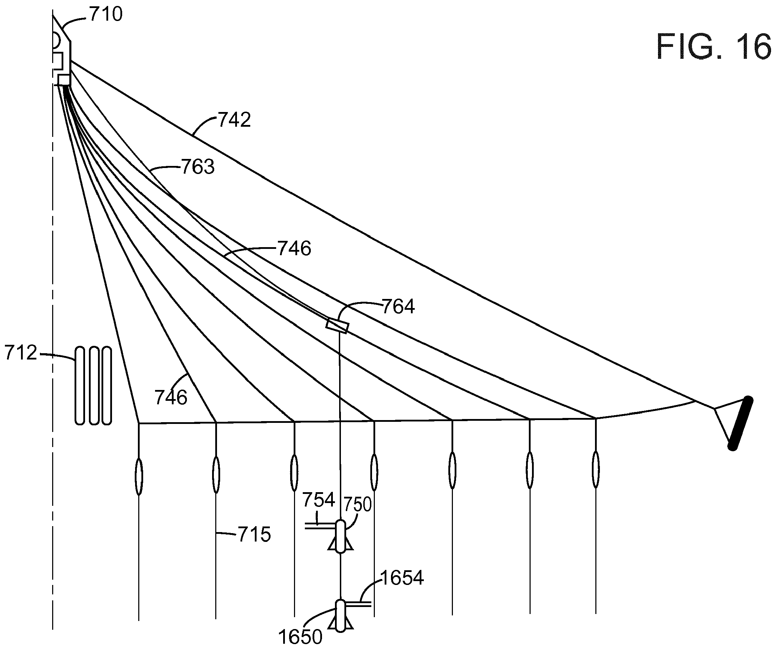

To improve the efficiency of the ROV when under water, in one application, is possible to deploy plural ROVs. The ROVs may be deployed in parallel or in series. For example, while Figure 7 shows a single ROV on the right hand side of the streamer spread, it is possible to have an additional ROV on the left hand side of the streamer spread, with the same configuration as the ROV on the right hand side. Alternatively, the ROVs may be deployed in series as illustrated in Figure 16. Having plural ROVs increases the efficiency of their operations. Figure 16 also shows each ROV having a cleaning mechanism as payload, e.g., ROV 750 has cleaning mechanism 754 and ROV 1650 has cleaning mechanism 1654. Although this figure shows the ROVs moving in between the streamers, in one application, the ROV(s) may attach with their payloads to the streamers and move along them for example, for cleaning operations.

The payload may be used to execute various operations. For example, the payload may be used to (1) clean the seismic spread from barnacles, e.g., using a scraper type tool, from fishing and debris caught in the spread, e.g., using mechanical means as cutter, pliers, (2) do preventive/curative maintenance on the spread as for example, changing batteries or parts (bird, compass, acoustics, etc.), refilling anti-barnacle devices (chemical or one that uses a scrapper), calibrate sensors, e.g., hydrophone, acoustic, depth sensors, perform visual inspection of the streamer spread, and/or detect air leaks on sources, and/or (3) execute specific tasks as deploying a PAM system on the spread, performing CTD (conductivity, temperature vs Depth) measurements, measuring currents everywhere on the spread, deploying mechanical sensors along the spread, assisting in cable separation operations in case of a crash (if motorized ROV), assist in streamer operation handling (for example, connect the ROV to the middle of the streamer, transfer a tension on the ROV umbilical, recover a first part of the streamer with the ROV supporting tension, release the ROV and recover a second part of the streamer), or assist or even perform section change (streamer reconfiguration). Those skilled in the art, based on this disclosure, would find other ways of using the ROV described herein.

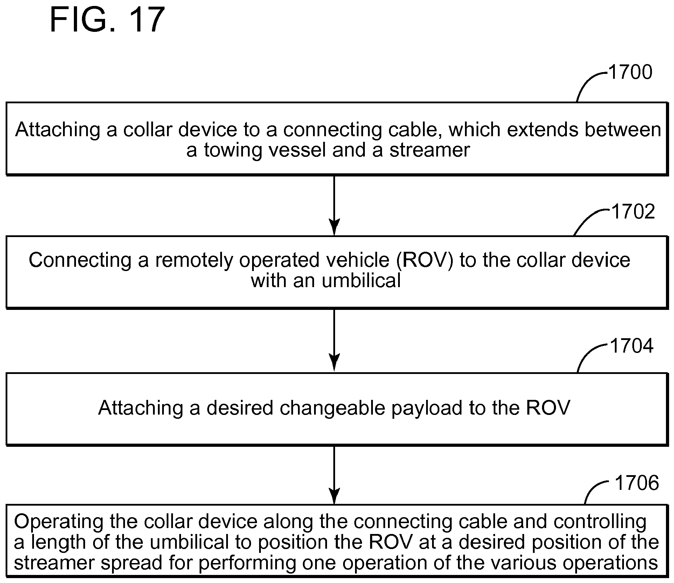

Based on the above discussed embodiments, a method for performing various operations on a streamer spread of a marine seismic data acquisition system is now discussed with regard to Figure 17. The method includes a step 1700 of attaching a collar device 764 to a connecting cable 746, 742, which extends between a towing vessel and a streamer, a step 1702 of connecting an ROV 750 to the collar device 764 with an umbilical 763, a step 1704 of attaching a desired changeable payload 754 to the ROV, and a step 1706 of operating the collar device along the connecting cable and controlling a length of the umbilical to position the ROV at a desired position of the streamer spread for performing one operation of the various operations.

Those skilled in the art would understand that although the above embodiments disclose a collar, any device that functions as the collar may be used. For example, the collar may be replaced with a pulley or sheave attached to the lead-in and the position of the ROV is controlled by adjusting the length of the ROV umbilical.

The above-discussed embodiments provide a system and a method for positioning an ROV about a streamer spread and performing at least one operation with the ROV on at least one component of the streamer spread. It should be understood that this description is not intended to limit the invention. On the contrary, the exemplary embodiments are intended to cover alternatives, modifications and equivalents, which are included in the spirit and scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

Although the features and elements of the present exemplary embodiments are described in the embodiments in particular combinations, each feature or element can be used alone without the other features and elements of the embodiments or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

## Claims

1. A seismic data acquisition system (700) comprising:
a streamer spread (740) including (i) a streamer (715) having receivers (716) for recording seismic data and (ii) a connecting cable (746, 742) connecting the streamer (715) to a towing vessel (710);
a collar device (764) configured to move along the connecting cable (746, 742), between the towing vessel and the streamer; and
a remotely operated vehicle, ROV, (750) attached to the collar device (764) with an umbilical (763) and configured to carry an interchangeable payload (754).

2. The system of Claim 1, wherein the payload (754) is configured to interact with the streamer spread.

3. The system of Claim 1, wherein the collar device comprises:
a frame (770) having an orifice (772) that receives the connecting cable,
a pulley (768) connected to the umbilical, wherein the umbilical is connected with one end to the vessel and with another end to the ROV; and
a collar control cable connected with one end to the vessel and with another end to the collar device,
wherein the collar control cable controls a position of the collar device along the connecting cable.

4. The system of Claim 3, wherein the collar device further comprises:
a winch (762) attached to the frame and connected to the collar control cable.

5. The system of Claim 1, wherein the collar device comprises:
a frame (770) having an orifice (772) that receives the connecting cable, and
a winch (762') attached to the frame and connected to the umbilical for controlling a position of the ROV along a longitudinal axis of the streamer.

6. The system of Claim 1, wherein the collar device comprises:
a frame (770) having an orifice (772) that receives the connecting cable,
a winch (762') attached to the frame and connected to the umbilical, wherein the umbilical is connected with one end to the winch and with another end to the ROV; and
an actuation device (780) attached to the frame and configured to move along the connecting cable.

7. The system of Claim 6, wherein the collar device further comprises:
a transceiver (786) attached to the frame and configured to exchange data and/or commands with the vessel.

8. The system of Claim 6, further comprising:
a local controller (788) attached to the frame and configured (1) to control the actuation device to move toward the vessel or toward the streamer along the connecting cable so that the ROV moves along a direction perpendicular to a longitudinal axis of the streamer, and (2) to control the winch to adjust a position of the ROV along the longitudinal axis of the streamer.

9. The system of Claim 1, further comprising:
another collar device (764B) configured to move along another connecting cable (746B, 742B), between the towing vessel and the streamer,
wherein the ROV is connected to the connecting cable and the another connecting cable.

10. The system of Claim 1, wherein the ROV comprises:
a vertical wing for controlling a location in a plane of the streamer spread, and
a horizontal wing for controlling a vertical location.

11. The system of Claim 1, further comprising:
a float attached to a winch of the collar device.

12. The system of Claim 1, further comprising:
a float attached to a winch of the ROV.

13. A payload system for performing various operations on a streamer spread of a marine seismic data acquisition system, the payload system comprising:
a collar device (764) to be attached to a connecting cable (746, 742), which extends between a towing vessel and a streamer of the marine seismic data acquisition system; and
a remotely operated vehicle, ROV, (750) attached to the collar device (764) with an umbilical (763) and configured to carry an interchangeable payload (754).

14. The system of Claim 13, wherein the collar device comprises:
a frame (770) having an orifice (772) that receives the connecting cable;
a pulley (768) attached to the frame and connected to the umbilical, wherein the umbilical is connected with one end to the vessel and with another end to the ROV; and
a collar control cable connected with one end to the vessel and with another end to the collar device,
wherein the collar control cable controls a position of the collar device along the connecting cable.

15. A method for performing various operations on a streamer spread of a marine seismic data acquisition system, the method comprising:
attaching (1700) a collar device (764) to a connecting cable (746, 742), which extends between a towing vessel and a streamer;
connecting (1702) a remotely operated vehicle, ROV, (750) to the collar device (764) with an umbilical (763);
attaching (1704) a desired interchangeable payload (754) to the ROV; and
operating (1706) the collar device along the connecting cable and controlling a length of the umbilical to position the ROV at a desired position of the streamer spread for performing one operation of the various operations.
